# EUROPÄISCHE PATENTSCHRIFT

(11) **EP 2 008 403 B1**
(45) Veröffentlichungstag und Bekanntmachung des Hinweises auf die Patenterteilung: **09.11.2016**
(21) Anmeldenummer: 07728240.8
(22) Anmeldetag: 18.04.2007
(51) Int. Cl.: H04W 40/12, H04W 84/18

(54) **VERFAHREN ZUM INSTALLIEREN EINES FUNKSYSTEMS IN EINEM GEBÄUDE**
METHOD FOR INSTALLING A RADIO SYSTEM IN A BUILDING
PROCÉDÉ D'INSTALLATION D'UN SYSTÈME RADIO DANS UN ÉDIFICE

(30) Priorität: 20.04.2006 DE 102006018281
(43) Veröffentlichungstag der Anmeldung: 31.12.2008
(73) Patentinhaber: Merten GmbH, 51674 Wiehl (DE)
(72) Erfinder: KÜRTEN, Roland, 51688 Wipperfürth (DE); HÜSCHEMENGER, Andreas, 51545 Waldbröl (DE)
(74) Vertreter: dompatent von Kreisler Selting Werner - Partnerschaft von Patent- und Rechtsanwälten mbB
(86) Internationale Anmeldenummer: PCT/EP2007/053778
(87) Internationale Veröffentlichungsnummer: WO 2007/122159

(56) Entgegenhaltungen:
- EP-A- 1 617 608
- WO-A1-2005/062554
- COUTO DE D S J ET AL: "PERFORMANCE OF MULTIHOP WIRELESS NETWORKS: SHORTEST PATH IS NOT ENOUGH" COMPUTER COMMUNICATION REVIEW, ACM, NEW YORK, NY, US, Bd. 33, Nr. 1, Januar 2003 (2003-01), Seiten 83-88, XP001224684 ISSN: 0146-4833
- DRAVES R ET AL: "COMPARISON OF ROUTING METRICS FOR STATIC MULTI-HOP WIRELESS NETWORKS" COMPUTER COMMUNICATION REVIEW, ACM, NEW YORK, NY, US, Bd. 34, Nr. 4, Oktober 2004 (2004-10), Seiten 133-144, XP001224044 ISSN: 0146-4833

## Beschreibung

Die Erfindung betrifft ein Verfahren zum Installieren eines Funksystems in einem Gebäude, wobei zwischen den Teilnehmern des Funksystems Einzelstrecken gebildet werden, die zu unterschiedlichen Routen für die Verbindung von jeweils einer Quelle zu einem Ziel kombinierbar sind, mit den Schritten
- Ermitteln der Qualität der Funkverbindungen der Einzelstrecken, und
- Erstellen und Speichern einer Routing-Tabelle, in der für die Kombination von Quelle und Ziel jeweils mindestens eine Route gespeichert ist.

Bekannt sind Systeme der Gebäudeleittechnik, bei denen innerhalb eines Gebäudes Datenübertragungen und Fernbedienungen durchführbar sind und jeweils Daten bzw. Befehle von einer Quelle zu einem Ziel übertragen werden. Solche Systeme benutzen in der Regel einen im Gebäude installierten Bus, der Bustelegramme übertragen kann. Ein bekanntes Bussystem ist der EIB-Bus. Ein Bussystem setzt die Verlegung von drahtgebundenen Busleitungen in dem Gebäude voraus. Diese Anforderung ist häufig schwer zu erfüllen.

Ein drahtloses Funksystem, von dem der Oberbegriff des Patentanspruchs 1 ausgeht, ist beschrieben in DE 601 08 946 T2 (Zensys). Dieses Funksystem weist verteilt angeordnete Teilnehmer auf, die jeweils drahtlos miteinander kommunizieren können, wobei allerdings die Reichweite der Verbindung begrenzt ist. Die Teilnehmer werden so angeordnet, dass jeder Teilnehmer mit mindestens einem anderen Teilnehmer kommunizieren kann. Zwischen zwei benachbarten Teilnehmern werden Einzelstrecken gebildet. Mehrere Einzelstrecken können zur Bildung einer Route kombiniert werden, wobei die akzeptablen Routen in einer Routingtabelle gespeichert werden. Das Definieren der Routen geschieht mit Hilfe eines Controllers bzw. einer Steuereinrichtung, in der die Netzwerktopologie gespeichert ist. Jeder der Teilnehmer verfügt über einen Sender und einen Empfänger. Der Controller kann mit jedem Teilnehmer in Verbindung treten. Zu diesem Zweck sind die Teilnehmer mit individuellen Identifizierungscodes versehen und einzeln aufrufbar. Bei den Teilnehmern wird unterschieden zwischen Routing-Slaves, die eine partielle Topologiekarte enthalten und keine Routen berechnen können, und Slaves, die keine Topologiekarte enthalten. Sowohl die Routing-Slaves als auch die Slaves wirken als Repeater, welche eine empfangene Nachricht weitersenden können. Alle Funkverbindungen sind bidirektional.

EP 1 617 608 A1 beschreibt ein Routingverfahren auf Basis einer kumulativen Gewichtung der erwarteten Übertragungszeiten für verschiedene Übertragungspfade.

Der Erfindung liegt die Aufgabe zugrunde, ein Verfahren zum Installieren eines Funksystems anzugeben, das es dem Installateur ermöglicht, das Funksystem entsprechend der Qualität der Einzelstrecken so aufzubauen, dass ein größtmögliches Maß an Sicherheit der Funkverbindungen erreicht wird.

Das erfindungsgemäße Verfahren ist durch den Patentanspruch 1 definiert. Es erfolgt eine Bewertung der Verbindung von einer Quelle zu einem Ziel unter Berücksichtigung der Kriterien:
a) Anzahl der Sprünge von Teilnehmer zu Teilnehmer innerhalb einer Route,
b) Vorhandensein singulärer Einzelstrecken, die nicht durch einen Parallelweg ersetzbar sind.

Innerhalb des Funksystems existieren Routing-Tabellen, in denen die akzeptablen Routen zwischen den verschiedenen Teilnehmern hinterlegt sind. Anhand dieser Routing-Tabellen wird die Verbindung zwischen einem der Teilnehmer als Quelle (Sensor) und einem anderen Teilnehmer als Ziel (Aktor) aufgebaut. Alle benötigten Einzelstrecken und Routen innerhalb einer Verbindung werden nach unterschiedlichen Kriterien bewertet.

Bei der Bewertung spielt das Kriterium a) eine Rolle. Dies bedeutet, dass die Anzahl der Sprünge pro Route möglichst klein gehalten wird. Eine Route, die weniger Sprünge erfordert, als eine andere Route, wird bevorzugt.

Singuläre Einzelstrecken stellen ein Risiko dar, da bei diesen Verbindungen in diesem Bereich keine alternativen Routen existieren. Singuläre Einzelstrecken fließen daher ebenfalls in die Bewertung ein.

In die Bewertung der Routen können einzeln oder kumulativ zusätzlich die folgenden Kriterien einbezogen werden:
c) Übertragungsqualität der Routen und Einzelstrecken,
d) die Anzahl der von der Quelle aus verfügbaren Einzelstrecken (Einstiegspunkte),
e) die Anzahl der zu dem Ziel führenden verfügbaren Einzelstrecken (Ausstiegspunkte).

Vorzugsweise werden alle Kriterien a) - e) in die Bewertung einbezogen. Die Kriterien können mit Gewichtungen versehen werden und die gewichteten Ergebnisse können addiert werden, wodurch eine Kennzahl für die Verbindung von der Quelle zum Ziel ermittelt wird.

Im Folgenden werden unter Bezugnahme auf die Zeichnungen Ausführungsbeispiele der Erfindung näher erläutert:
Es zeigen:
   - Fig. 1: ein erstes Netz aus Einzelstrecken, die zwischen benachbarten Teilnehmern eines Funksystems gebildet wird, wobei aus den Einzelstrecken Routen zusammengestellt werden können,
   - Fig. 2: ein zweites Beispiel für ein Funksystem,
   - Fig. 3: ein drittes Beispiel für ein Funksystem,
   - Fig. 4: ein Beispiel für die Darstellung der Qualität der Einzelstrecken und
   - Fig. 5: ein Beispiel für die Darstellung der Qualität der Routen in einem vernetzten Funksystem.

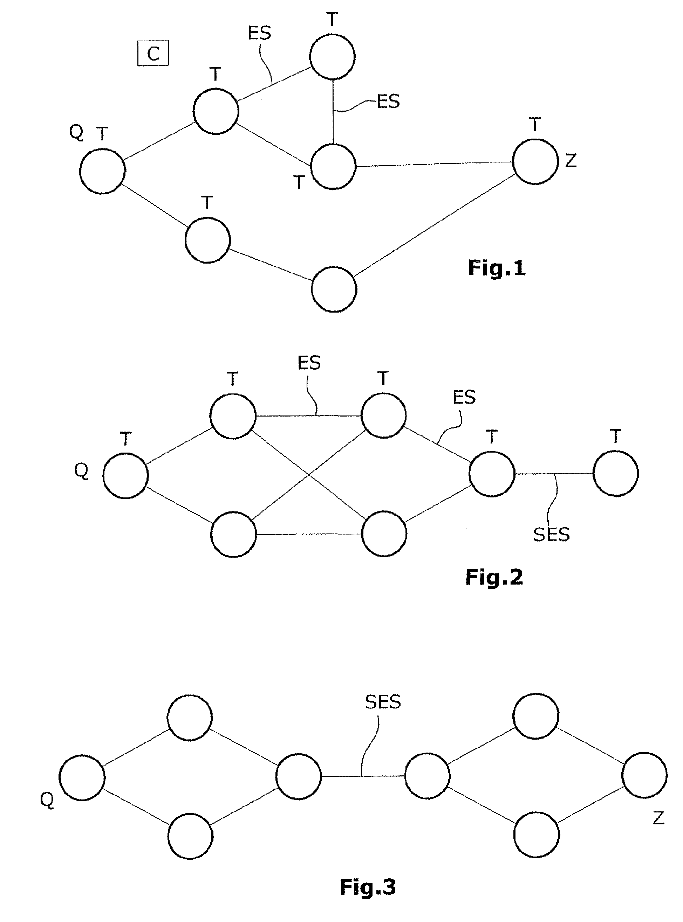

In den Figuren 1 - 4 sind jeweils unterschiedliche sogenannte vermaschte Funksysteme dargestellt, deren Teilnehmer T jeweils aus einer Kombination von Sender und Empfänger bestehen. Die Teilnehmer T sind in einem Gebäude verteilt angeordnet und sie bilden ein Teilnehmernetz, wobei die Teilnehmer T drahtlos kommunizieren können. Jeder Teilnehmer ist mit einer individuellen Kennung ID ausgestattet, die unverwechselbar ist, so dass die Teilnehmer adressiert werden können.

Die Teilnehmer T sind in der Regel in Verbindung mit Geräten vorgesehen. Bei den Geräten wird hauptsächlich unterschieden zwischen Sensoren und Aktoren. Ein Sensor ist beispielsweise ein elektrischer Taster oder Schalter und ein Aktor ist ein Betätigungselement, das auf ein elektrisches Signal hin eine Funktion veranlasst, wie beispielsweise das Einschalten eines elektrischen Gerätes, Ventils, u. dgl. Zu den Geräten, die mit den Teilnehmern T ausgestattet werden, gehören außer Sensoren wie Taster oder Schalter Aktoren, wie Elektromagnete, beispielsweise Garagentorantriebe, Rollladenantriebe oder Haushaltsmaschinen, wie beispielsweise Waschmaschinen oder Herde.

Für eine zu übertragende Information bildet einer der Teilnehmer die Quelle Q und ein anderer das Ziel Z. Die Identifizierungscodes von Quelle Q und Ziel Z werden dem Controller C mitgeteilt und dieser entnimmt aus der in ihm gespeicherten Routingtabelle die günstigste Route, die Quelle und Ziel verbindet. Diese Route setzt sich aus einer oder mehreren Einzelstrecken ES zusammen. Eine Einzelstrecke ist eine Funkstrecke, die zwei benachbarte Teilnehmer T direkt verbindet (Figur 1).

Im Rahmen der Installationsarbeiten erfolgt eine Bewertung der Funkverbindungen zwischen funktional zusammengehörigen Teilnehmern (Sensor/Aktor), wobei nach festgelegten Kriterien die beste Übertragungsqualität und die höchste Übertragungssicherheit geprüft wird.

Wenn ein Teilnehmer durch das Funksystem nicht mit hinreichender Sicherheit erreichbar ist, z. B. weil dieser Teilnehmer in der Garage oder im Keller installiert ist, kann der Installateur einen weiteren Teilnehmer, der lediglich aus einer Sendeempfängereinheit besteht, installieren, um den schwer erreichbaren Teilnehmer an das Funksystem anzubinden. Andererseits kann er auch den schwer erreichbaren Teilnehmer versetzen und alternative Positionen ermitteln, um die Erreichbarkeit des Teilnehmers zu verbessern.

Die Messung der Signalqualitäten zwischen den Teilnehmern T wird durch den Controller C per Funk initiiert. Der Controller beauftragt jeweils einen Routing-Slave als Funkknoten, um die Erreichbarkeit eines zweiten Funkknotens zu messen. Der zweite Funkknoten quittiert diesen Versuch mit dem Senden seines Identifikationscodes.

Figur 2 zeigt einen Ausschnitt aus einem anderen Funknetz, bei dem ebenfalls eine Quelle Q mit einem Ziel Z zu verbinden ist. Die Route wird durch Aneinanderreihen von Einzelstrecken ES zusammengesetzt. Bei der letzten Einzelstrecke vor dem Ziel Z handelt es sich um eine singuläre Einzelstrecke SES, also eine Einzelstrecke, die nicht durch einen Parallelweg ersetzbar ist. Alle übrigen Einzelstrecken ES sind durch andere Routen ersetzbar.

Figur 3 zeigt ein Beispiel eines weiteren Netzes oder Netzausschnitts, wobei eine singuläre Einzelstrecke SES sich im Mittelabschnitt der Routen zwischen Quelle Q und Ziel Z befindet.

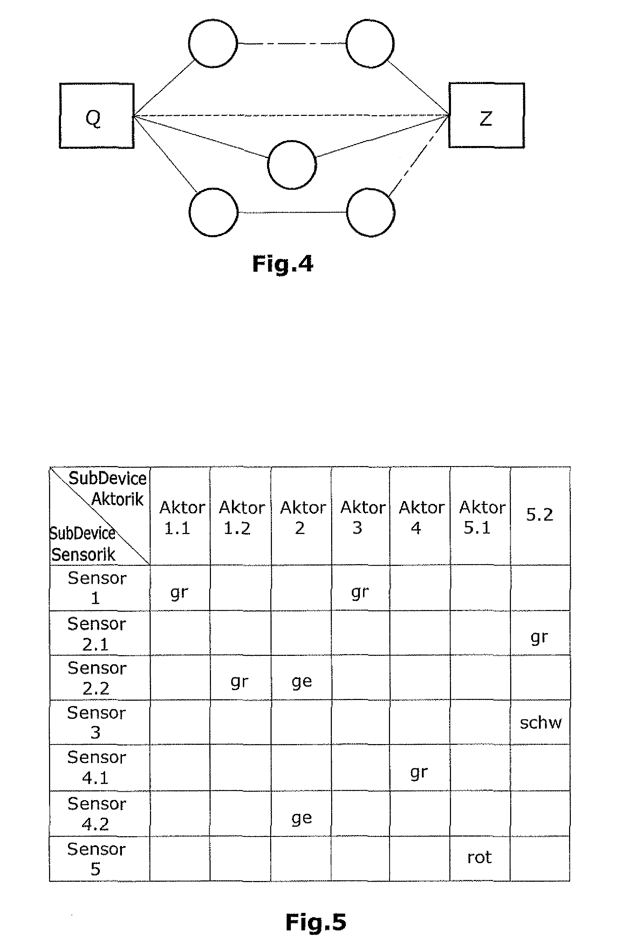

Figur 4 zeigt einen Routenplan aus vier unterschiedlichen Routen, die von der Quelle Q zu dem Ziel Z führen. Die durchgezogenen Linien repräsentieren gute Verbindungen, die gestrichelte Linie repräsentiert eine befriedigende Verbindung und die strich-punktierten Linien repräsentieren jeweils eine schlechte Verbindung. Die Darstellung gemäß Figur 4 kann an einem Bildschirm angezeigt werden, wobei die Qualität der Verbindungen durch unterschiedliche Farben bezeichnet wird. Auf diese Weise hat der Installateur einen direkten Überblick über die Routenqualität. Die Einzelstrecken bzw. Routen können auch durch Prozent-Werte oder nach dem Schulnotensystem (1 - 6) bezeichnet werden.

Die nachfolgende Tabelle 1 gibt beispielhaft die Bewertung der Verbindung von einer Quelle zu einem Ziel unter Zugrundelegung der einzelnen Kriterien an:

**Tabelle 1**

| Q-Level | Punkte | Anzahl Einstiegspunkte | Routen mit x Hops | | | | Ergebnis der Einzelstrecken Messung% | Singuläre Strecken | Ausstiegs punkte (z.B. für DC Aktoren) |
|---|---|---|---|---|---|---|---|---|---|
| | | | 0 | 1 | 2 | >3 | | | |
| Gut | 3 | >2 | >1 | >1 | >2 | >3 | 51-100 | 0 | >2 |
| befriediqend | 2 | 2 | 0 | 1 | 1 - 2 | 2 - 3 | 26-50 | 1 | 2 |
| schlecht | 1 | 1 | - | 0 | 0 | 0 | 1-25 | >1 | 1 |
| Nicht vorhanden | 0 | 0 | - | - | - | - | 0 | - | 0 |
| Gewichtung % | | 30 | 20 | 7 | 2 | 1 | 15 | 20 | 5 |

In dieser Tabelle bezeichnet die Anzahl der Einstiegspunkte diejenige Zahl von Einzelstrecken, die von der Quelle Q über das Netz zum Ziel Z führt. Bei den Ausführungsbeispielen der Figuren 1 - 3 beträgt die Anzahl der Einstiegspunkte jeweils "2". Die Hops bezeichnen die Sprünge bzw. die Zahl der Teilnehmer T, die als Zwischenstation in einer Route enthalten sind. Bei der Einzelstreckenmessung der Teilnehmer aus den ermittelten Routen wird die Übertragunsqualität der beteiligten Einzelverbindungen bewertet. Die Qualität der Verbindung von einer Quelle zu einem Ziel wird aus den Einzelstrecken-Qualitäten wird auf folgende Weise berechnet:
- innerhalb einer Route ist die schwächste Einzelstrecke ausschlaggebend für die Gesamtstrecke,
- von den alternativen Routen ist die beste Gesamtstrecke für die Verbindung zwischen Quelle und Ziel heranzuziehen.

Für die Strecken der ermittelten Einstiegspunkte wird eine Güte von 50 % angesetzt.

Als weiteres Kriterium wird die Anzahl der singulären Einzelstrecken SES berücksichtigt und schließlich als weiteres Kriterium die Anzahl der Ausstiegspunkte, d. h. derjenigen Einzelstrecken, die jeweils unmittelbar zu dem Ziel Z führen.

Die Punktverteilung für die einzelnen Kriterien ergibt sich aus Tabelle 1 sowie ferner auch die Gewichtung, mit der diese Kriterien gewichtet werden.

Die Bewertung einer Verbindung zwischen Quelle und Ziel ergibt sich durch die Summe der gewichteten Ergebnisse der einzelnen Kriterien in Tabelle 1.

Die nachfolgende Tabelle 2 gibt die Bewertung der Verbindung zwischen Quelle und Ziel anhand der Summe der Gesamt-Punktzahlen an. Anhand dieser Bewertung können eventuell notwendige Anpassungen installationsseitig vorgenommen werden.

**Tabelle 2**

| | | |
|---|---|---|
| 0 | keine Verbindung | schw. |
| 1..100 | schlechte Verbindung | rot |
| 101..200 | befriedigende Verbindung | ge. |
| 201..300 | gute Verbindung | gr. |

Für die Darstellung eines gesamten Netzwerkes ist die Routendarstellung gemäß Figur 4 ungeeignet. Hierfür wird die in Figur 5 dargestellte Tabellenansicht gewählt. In der Tabelle sind alle am System beteiligten Knoten (Teilnehmer) aufgeführt. In den Kreuzungen ist die Funktion mit ihrer Güte dargestellt. Dabei bezeichnet "gr." (grün) eine Route mit guter Verbindung, "ge." (gelb) eine Route mit befriedigender Verbindung, "rot" (rot) eine Route mit schlechter Verbindung und "schw." (schwarz) eine Route, bei der "keine Verbindung" herstellbar ist.

Die Routing-Tabelle des Systems wird aktualisiert durch neues Austesten der Verbindungen der Routing-Slaves. Der Controller C als Funk-Konfigurations-Tool veranlasst jeden Routing-Slave, seine Verbindung zu den anderen Routing-Slaves zu ermitteln. Dies erfolgt mit einer Sendeleistung von 100 %. Jeder Routing-Slave wird dabei gegen jeden anderen Routing-Slave geprüft. Der Routing-Slave erhält dabei jeweils den Auftrag, einen bestimmten anderen Routing-Slave auf Erreichbarkeit zu prüfen. Die Routing-Tabelle des Systems wird durch diesen Vorgang im Controller aktualisiert und kann nach Ende des Vorgangs ausgelesen werden.

Das Funk-Kofigurations-Tool mit dem Controller C wird an einem finalen Installationsplatz angeschlossen, vorzugsweise mittels einer USB-Schnittstelle, so dass eine Handmessung im undefinierten Raum entfällt.

## Patentansprüche

1. Verfahren zum Installieren eines Funksystems in einem Gebäude, wobei zwischen den Teilnehmern (T) des Funksystems Einzelstrecken (ES) gebildet werden, die zu unterschiedlichen Routen für die Verbindung von jeweils einer Quelle (Q) zu einem Ziel (Z) kombinierbar sind, mit den Schritten
- Ermitteln der Qualität der Funkverbindungen der Einzelstrecken (ES),
- Erstellen und Speichern einer Routing-Tabelle, in der für die Kombination von Quelle und Ziel jeweils mindestens eine Route gespeichert wird,
**dadurch gekennzeichnet,**
**dass** eine Bewertung der Verbindung von einer Quelle zu einem Ziel unter Berücksichtigung der folgenden Kriterien erfolgt:
a) Anzahl der Sprünge von Teilnehmer zu Teilnehmer innerhalb einer Route,
b) Vorhandensein singulärer Einzelstrecken (SES), die nicht durch einen Parallelweg ersetzbar sind, und
**dass** die Kriterien mit Gewichtungen versehen und die gewichteten Ergebnisse addiert werden, wodurch eine Kennzahl für die Verbindung von der Quelle zum Ziel ermittelt wird.

2. Verfahren nach Anspruch 1, **dadurch gekennzeichnet, dass** in die Bewertung das folgende Kriterium einbezogen wird:
c) Übertragungsqualität der Routen und Einzelstrecken (ES).

3. Verfahren nach Anspruch 1 oder 2, **dadurch gekennzeichnet, dass** in die Bewertung das folgende Kriterium einbezogen wird:
d) Die Anzahl der von der Quelle (Q) aus verfügbaren Einzelstrecken, Einstiegspunkte.

4. Verfahren nach einem der Ansprüche 1 - 3, **dadurch gekennzeichnet, dass** in die Bewertung das folgende Kriterium einbezogen wird:
e) Die Anzahl der zu dem Ziel (Z) führende verfügbaren Einzelstrecken, Ausstiegspunkte.

## Claims

1. A method for installing a radio system in a building, wherein individual sections (ES) are formed between the terminals (T) of the radio system that may be combined into different routes for connecting a respective source (Q) with a destination (Z), comprising the following steps:
- determining the quality of the radio link of the individual sections (ES), and
- establishing and storing a routing table which stores at least one route for each combination of source and destination,
**characterized in that**
an evaluation of the link between a source and a destination is done with consideration to the following criteria:
a) the number of hops from terminal to terminal within a route,
b) the presence of unique individual sections (SES) that can not be replaced with a parallel path, and
the criteria are provided with weightings, and the weighted results are added, whereby a parameter for the link from the source to the link is determined.

2. The method of claim 1, **characterized in that** the evaluation includes the following criterion:
c) the communication quality of the routes and individual sections (ES).

3. The method of claim 1 or 2, **characterized in that** the evaluation includes the following criterion:
d) the number of the individual sections available from the source (Q), points of entry.

4. The method of one of claims 1-3, **characterized in that** the evaluation includes the following criterion:
e) the number of the available individual sections leading to the destination (Z), exit points.

## Revendications

1. Procédé d'installation d'un système radio dans un bâtiment, dans lequel sont formées entre les abonnés (T) du système radio des sections individuelles (ES) qui peuvent être combinées en différents parcours pour la liaison de respectivement une source (Q) à une destination (Z), comprenant les étapes suivantes :
- détermination de la qualité des liaisons radio des sections individuelles (ES),
- création et mémorisation d'une table d'acheminement dans laquelle est mémorisé respectivement au moins un parcours pour la combinaison de la source et de la destination,
**caractérisé**
**en ce qu'**une évaluation de la liaison d'une source à une destination s'effectue en tenant compte des critères suivants :
a) nombre de sauts d'abonné à abonné à l'intérieur d'un parcours,
b) présence de sections individuelles uniques (SES) qui ne sont pas remplaçables par un trajet parallèle, et
**en ce que** les critères sont pourvus de pondérations et les résultats pondérés sont additionnés, ce qui permet de déterminer un chiffre caractéristique pour la liaison de la source à la destination.

2. Procédé selon la revendication 1, **caractérisé en ce que** le critère suivant est inclus dans l'évaluation :
c) qualité de transmission des parcours et sections individuelles (ES).

3. Procédé selon la revendication 1 ou 2, **caractérisé en ce que** le critère suivant est inclus dans l'évaluation :
d) nombre de sections individuelles (points d'entrée) disponibles à partir de la source (Q).

4. Procédé selon l'une des revendications 1 à 3, **caractérisé en ce que** le critère suivant est inclus dans l'évaluation :
e) nombre de sections individuelles (points de sortie) disponibles menant à la destination (Z).
